# EUROPEAN PATENT APPLICATION

(11) **EP 1 901 077 A2**
(43) Date of publication of application: **19.03.2008**
(21) Application number: 07018008.8
(22) Date of filing: 13.09.2007
(51) Int. Cl.: G01P 3/44, G01P 3/488

(54) **Pulsar ring and bearing device**

(30) Priority: 15.09.2006 JP 2006250223
(71) Applicant: JTEKT Corporation, Osaka-shi Osaka 542-8502 (JP)
(72) Inventor: Morita, Yoshiyuki, Osaka-shi Osaka 542-8502 (JP)
(74) Representative: Weber, Joachim

(57) **Abstract**

A pulsar ring (7) includes an annular support member (22) having a large diameter part (25) which is provided with a flange part (26) for positioning a plurality of gear plates (23) formed of silicon steel, at a left end part thereof. A concave groove (33) in an axial direction is formed on an outer periphery of the large diameter cylindrical part (25) of the annular support member (22) of the pulsar ring (7), and convex parts (34) to be engaged with this concave groove (33) are provided on inner peripheries of the respective gear plates formed of silicon steel. After a plurality of the gear plates formed of silicon steel have been assembled, the pressure ring is assembled to the large diameter cylindrical part of the annular support member by shrinkage fit.

## Description

### BACKGROUND OF THE INVENTION

### 1. Field of the Invention

The present invention relates to a pulsar ring mounted on an axle of a railway car or the like to constitute a car speed detecting sensor, and a bearing device to which this pulsar ring is attached.

### 2. Related Art

In JP-A-7-8771U, it is proposed to use a pulsar ring which is composed by stacking a plurality of silicon steel plates in a shape of gear, in a rotation speed detecting device of a car.

In case where the above described pulsar ring in JP-A-7-8771U is used for the railway car, a plurality (about several tens) of silicon steel plates are assembled one by one to an outer periphery of an annular support member having a flange part which is formed at its one end by shrinkage fit. Then, it is considered to prevent drops of these gear plates formed of silicon steel, by assembling a pressure ring for preventing the drops of the gear plates formed of silicon steel by shrinkage fit. However, it would be troublesome to assemble such a large number of gear plates by shrinkage fit, and moreover works for aligning teeth of all the gear plates formed of silicon steel at the same position in phase would take much troubles.

### SUMMARY OF THE INVENTION

Under the circumstances, an obj ect of the invention is to provide a pulsar ring which can be mounted on a car with reduced troubles, and a bearing device provided with this pulsar ring.

According to the invention, there is provided a pulsar ring comprising an annular support member having a cylindrical part which is provided, at its one end, with a positioning flange part, a plurality of gear plates formed of silicon steel which are positioned by the positioning flange part and assembled to an outer periphery of the cylindrical part of the annular support member, and a pressure ring which is finally assembled to the outer periphery of the cylindrical part of the annular support member for preventing drops of the gear plates formed of silicon steel, characterized in that a concave groove in an axial direction is formed on the outer periphery of the cylindrical part of the annular support member, and convex parts to be engaged with this concave groove are provided on inner peripheries of the respective gear plates formed of silicon steel.

According to the invention, there is further provided a bearing device comprising an axle box provided on a car body for supporting an axle, a bearing including an inner ring which is rotated with the axle, an outer ring fixed to the axle box, and a rolling element arranged between both the inner and outer rings, a pulsar ring as a detected part of a car speed detecting sensor which is mounted on the axle, and a detecting coil as a detecting part of the car speed detecting sensor which is mounted on the axle box, the pulsar ring including an annular support member having a cylindrical part which is provided, at its one end, with a positioning flange part, a plurality of gearplates formed of silicon steel which are positioned by the positioning flange part and assembled to an outer periphery of the cylindrical part of the annular support member, and a pressure ring which is finally assembled to the outer periphery of the cylindrical part of the annular support member for preventing drops of the gear plates formed of silicon steel, characterized in that a concave groove in an axial direction is formed on the outer periphery of the cylindrical part of the annular support member of the pulsar ring, and convex parts to be engaged with this concave groove are provided on inner peripheries of the respective gear plates formed of silicon steel.

The pulsar ring constitutes the detected part of the car speed detecting sensor, by forming teeth at equal intervals on an outer periphery of a ferromagnetic body in a shape of disc having a hole. A loss of eddy current can be decreased by stacking a plurality of gear plates formed of silicon steel. The pulsar ring according to the invention is formed by assembling a plurality of the gear plates formed of silicon steel by loose fit, having the concave groove engaged with the convex parts so as to be aligned in phase, and then, by assembling the pressure ring to the annular support member by shrinkage fit (press-fit). Because a plurality of the gear plates formed of silicon steel are assembled, in this manner, not by shrinkage fit (press-fit) but by engagement between the concave groove and the convex parts, time required for assembling is remarkably reduced. Drops of a plurality of the gear plates formed of silicon steel can be prevented by assembling the pressure ring by shrinkage fit. Generally, an annular lid member constituting a sealing unit is fixed to an end part of the axle, and the annular support member of the pulsar ring is provided with an appropriate mounting part to the lid member, whereby the pulsar ring is fixed to the lid member by means of this mounting part, and accordingly, to the axle.

The concave groove and the convex part are in a rectangular shape in section, for example, but not limited to this shape.

The annular support member of the pulsar ring is formed of metal such as steel, and includes a large diameter cylindrical part having an outwardly directed flange part for positioning the gear plates which is provided at the outer end thereof in the axial direction, and supporting a plurality of the gear plates formed of silicon steel, an inwardly directed flange part continued from an inner end in the axial direction of the large diameter cylindrical part, a small diameter cylindrical part continued from an inner diameter of the inwardly directed flange part and extending inward in the axial direction, an outwardly directed flange part for mounting which is continued from an inner end in the axial direction of the small diameter cylindrical part and provided with a bolt insertion hole, and an axially inwardly projecting part provided close to the inner diameter of the outwardly directed flange part for mounting. The outwardly directed flange part for mounting is butted against the lid member from outside in the axial direction, while the axially inwardly projecting part is butted against the lid member from inside in a radial direction, and a bolt which is passed through the bolt insertion hole of the outwardly directed flange part is screwed into a threaded hole in the lid member, whereby the pulsar ring is fixed to the axle.

According to the pulsar ring and bearing device of this invention, a plurality of the gear plates formed of silicon steel are assembled not by shrinkage fit (press-fit) but by engagement between the concave groove and the convex parts, and hence, a time required for assembling can be remarkably reduced.

### BRIEF DESCRIPTION OF THE DRAWINGS

Fig. 1 is a longitudinal sectional view of a pulsar ring and a bearing device in an embodiment according to the invention.
Fig. 2 is an enlarged sectional view of the pulsar ring.
Fig. 3 is a right side view of an essential part in Fig. 2.

### DETAILED DESCRIPTION OF THE PREFERRED EMBODIMENTS

Now, an embodiment of the invention will be described referring to the drawings.

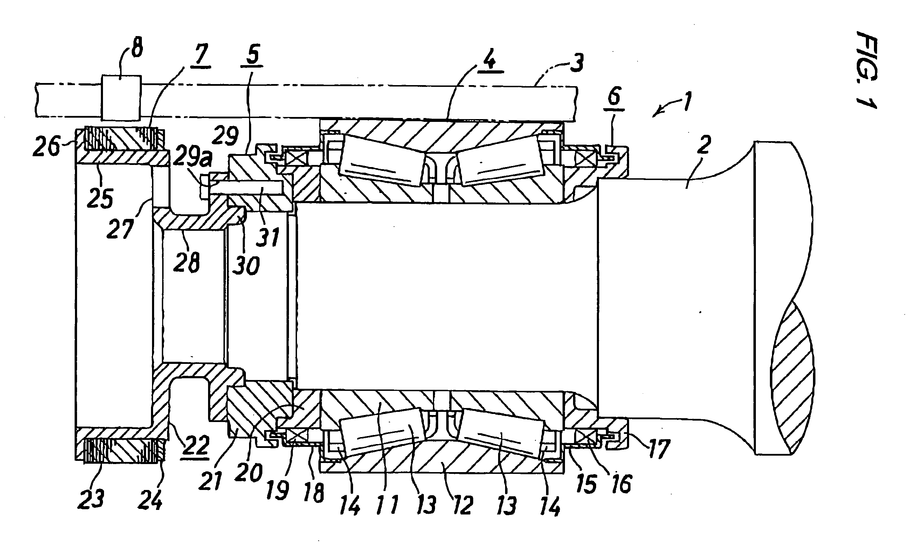

Figs. 1 to 3 show an embodiment of a pulsar ring and a bearing device according to the invention. In the following description, "right" and "left" correspond to a right side and a left side in Fig. 1. The right side is an inside of the car, and the left side is an outside of the car.

The baring device 1 is used for the railway car, and includes an axle box 3 provided on a body of the car, a rolling bearing 4 for supporting an axle 2, sealing units 5, 6 provided at both sides of the rolling bearing 4, a pulsar ring 7 as a detected part of a car speed detecting sensor which is mounted on a left end part of the axle 2, and a detecting coil 8 as a detecting part of the car speed detecting sensor which is mounted on the axle box 3.

The rolling bearing 4 is a double row tapered roller bearing, and has an inner ring 11 which is rotated with the axle 2, an outer ring fixed to the axle box 3, tapered rollers 13 which are arranged in two rows between the inner and outer rings 11, 12, and a cage 14 for holding the tapered rollers 13 in the respective rows.

The sealing unit 6 at the right side (inward in an axial direction) includes a seal cover 15 fixed to the outer ring 12, a seal part 16 fixed to the seal cover 15, and a lid member 17 which receives the seal part 16 and prevents inward movement of the inner ring 11 in the axial direction.

The sealing unit 5 at the left side (outward in the axial direction) includes a seal cover 18 fixed to the outer ring 12, a seal part 19 fixed to the seal cover 18, and an annular seal receiving member 20 which receives the seal part 19 and prevents outward movement of the inner ring 11 in the axial direction, and a lid member 21 opposed to the members 18, 19, 20 from outside and prevents outward movement of the seal receiving member 20 in the axial direction.

The pulsar ring 7 includes an annular support member 22, a plurality of gear plates 23 formed of silicon steel which have been assembled to the annular support member 22, and a pressure ring 24 for preventing drops of a plurality of the gear plates 23 formed of silicon steel.

The annular support member 22 of the pulsar ring 7 includes a large diameter cylindrical part 25 which has an outwardly directed flange part 26 for positioning the gear plates at the left end thereof, and supports a plurality of the gear plates 23 formed of silicon steel, an inwardly directed flange part 27 continued from a right end of the large diameter cylindrical part 25, a small diameter cylindrical part 28 continued from an inner diameter of the inwardly directed flange part 27 and extending to the right, an outwardly directed flange part 29 for mounting which is continued from a right end of the small diameter cylindrical part 28 and formed with a bolt insertion hole 29a, and a rightward projecting part 30 (an axially inwardlyproj ectingpart) which is provided close to an inner diameter of the outwardly directed flange part 29 for mounting.

The outwardly directed flangepart 29 formountingof the annular support member 22 is butted against the lid member 21 from the left side, and the rightward projecting part 30 is butted against the lid member 21 from inside in a radial direction. At the same time, a bolt 31 which is passed through the bolt insertion hole 29a of the outwardly directed flange part 29 is screwed into a threaded hole of the lid member 21, whereby the pulsar ring 7 is fixed to the axle (rotation side).

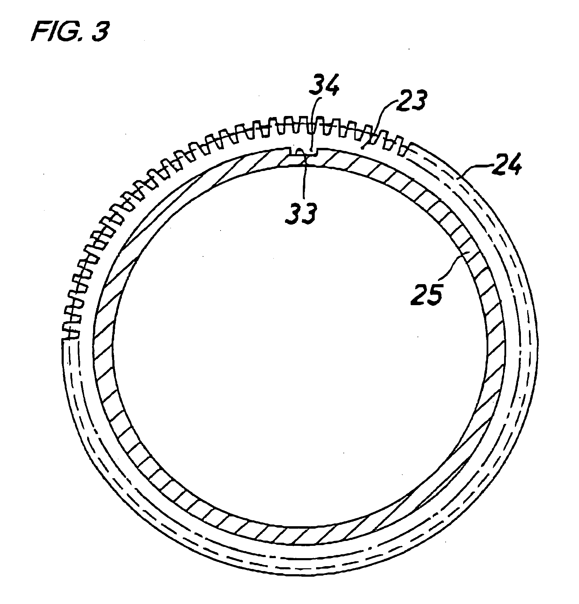

Each of the gear plates 23 formed of silicon steel has an outer circumferential profile as shown in Fig. 3.

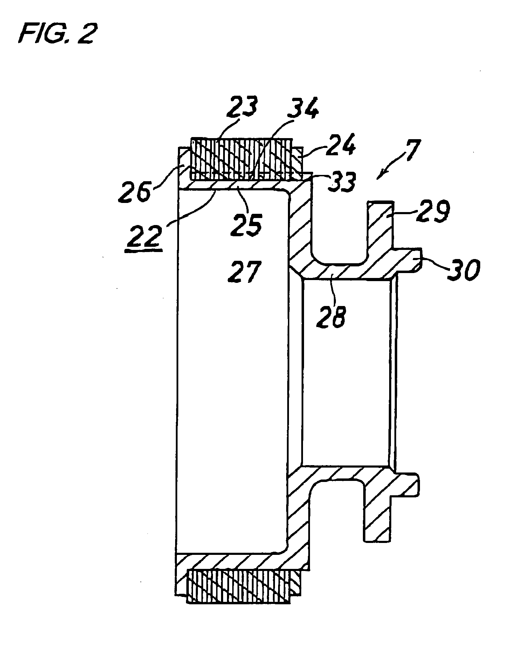

As shown in an enlarged scale in Figs. 2 and 3, a concave groove 33 in the axial direction is formed on an outer periphery of the large diameter cylindrical part 25, and convex parts 34 to be engaged with this concave groove 33 are provided on inner peripheries of the respective gear plates 23 formed of silicon steel.

A plurality of the gear plates 23 formed of silicon steel are aligned in phase so that the respective teeth may come to the same position, and assembled to the large diameter cylindrical part 25 of the annular support member 22, by the engagement between their convex parts 34 and the concave groove 33 of the annular support member 22. After a plurality of the gear plates 23 formed of silicon steel have been assembled, the pressure ring 24 is assembled to the large diameter cylindrical part 25 of the annular support member 22 by shrinkage fit, whereby drops of the gear plates 23 from the annular support member 22 are prevented.

Temperature at the shrinkage fit of the pressure ring 24 is 70 to 80°C, forexample. Provided that an inner diameter of the pressure ring 24 is 100mm for example, an interference is about 100µm (an outer diameter of the large diameter part 25 of the annular support member 22 at room temperature is nearly equal to the inner diameter of the pressure ring 24 X 1.001 to 1.0006)

## Claims

1. A pulsar ring comprising:
an annular support member having a cylindrical part which is provided with a positioning flange part at one end thereof;
a plurality of gear plates formed of silicon steel which are positioned by the positioning flange part and assembled to an outer periphery of the cylindrical part of the annular support member; and
a pressure ring which is finally assembled to the outer periphery of the cylindrical part of the annular support member for preventing drops of a plurality of the gear plates formed of silicon steel,
wherein a concave groove in an axial direction is formed on the outer periphery of the cylindrical part of the annular support member, and convex parts to be engaged with this concave groove are provided on inner peripheries of the respective gear plates formed of silicon steel.

2. A bearing device comprising:
an axle box provided on a car body for supporting an axle;
a bearing including an inner ring which is rotated with the axle;
an outer ring fixed to the axle box; and
a rolling element arranged between both the inner and outer rings, a pulsar ring as a detected part of a car speed detecting sensor which is mounted on the axle, and a detecting coil as a detecting part of the car speed detecting sensor which is mounted on the axle box,
said pulsar ring including an annular support member having a cylindrical part which is provided, at its one end, with a positioning flange part, a plurality of gear plates formed of silicon steel which are positioned by the positioning flange part and assembled to an outer periphery of the cylindrical part of the annular support member, and a pressure ring which is finally assembled to the outer periphery of the cylindrical part of the annular support member for preventing drops of a plurality of the gear plates formed of silicon steel, wherein a concave groove in an axial direction is formed on the outer periphery of the cylindrical part of the annular support member of the pulsar ring, and convex parts to be engaged with this concave groove are provided on innerperipheries of the respective gear plates formed of silicon steel.
